Europäisches Patentamt

**(19)** European Patent Office

Office européen des brevets

**(11)** Publication number : **0 324 531 B1**

# **(12)** EUROPEAN PATENT SPECIFICATION

**(45)** Date of publication of patent specification :
07.06.95 Bulletin 95/23

**(51)** Int. Cl.⁶ : **G05D 13/62,** F02D 11/10, H02P 8/00

**(21)** Application number : **89200557.0**

**(22)** Date of filing : **09.03.87**

**(54)** Brake-initiated release of an electric motor driven cruise control apparatus.

**(30)** Priority : **16.04.86 US 852762**

**(43)** Date of publication of application :
**19.07.89 Bulletin 89/29**

**(45)** Publication of the grant of the patent :
**07.06.95 Bulletin 95/23**

**(84)** Designated Contracting States :
**DE FR GB IT**

**(56)** References cited :
EP-A- 0 026 656
EP-A- 0 143 241
EP-A- 0 202 789
WO-A-84/03911
US-A- 4 187 734
PATENT ABSTRACTS OF JAPAN vol. 9, no. 39
(E-297)(1762) 19 February 1985, & JP-A-59
179000
PATENT ABSTRACTS OF JAPAN vol. 9, no.
251 (E-348)(1974) 08 September 1985, &
JP-A-60 098900

**(60)** Publication number of the earlier application in accordance with Art. 76 EPC : **0 242 039**

**(73)** Proprietor : **GENERAL MOTORS CORPORATION**
**General Motors Building**
**3044 West Grand Boulevard**
**Detroit Michigan 48202 (US)**

**(72)** Inventor : **Nehmer, Carl Albert**
**1410 Kings Carriage Road**
**Grand Blanc Michigan 48439 (US)**
Inventor : **Aikman, Steven William**
**7086 Timberwood**
**Davison Michigan 48423 (US)**

**(74)** Representative : **Denton, Michael John et al**
**Patent Section**
**1st Floor**
**Gideon House**
**28 Chapel Street**
**Luton Bedfordshire LU1 2SE (GB)**

EP 0 324 531 B1

## Description

This invention relates to electric motor driven cruise control apparatus for motor vehicles, and more particularly to a control apparatus for disengaging the cruise control apparatus upon actuation of the vehicle brakes.

Stepper motors are well suited to positional servo control applications, primarily because they interface easily with digital controllers and can reliably position a mechanical load without the use of a rotor position sensor. The rotor is stable in any of a number of discrete rotary positions, and is driven in a forward or reverse direction in a step-by-step manner by sequentially advancing the stator winding energisation at a controllable rate, or frequency. Accordingly, there is substantially no positional drift, and the rotor position can be determined in relation to the history of the stator winding advancement.

In most applications, the objective is to reliably move the mechanical load to a desired position in the shortest amount of time. In a stepper motor system, this means that the rotor has to be driven as quickly as possible without losing the synchronism between stator winding energisation and rotor position. A critical motor characteristic in this regard is pullout torque -- that is, the maximum load torque which may be applied to the rotor without loss of synchronism. Positional error occurs when the load torque exceeds the pullout torque. Typically, the pullout torque decreases with increasing rotor speed, and therefore effectively limits the speed of response of the servo. Accurate positional control of a motor vehicle engine throttle is particularly difficult because the load is variable over its range of travel. In certain throttle control applications, such as vehicle speed control, the load variation is especially great because the operator of the vehicle can override the servo via the accelerator pedal linkage. The conventional approach is to make a compromise between positional accuracy and speed of response.

In the motor vehicle vernacular, the term cruise control is used in referring to an arrangement which controls the powertrain of the vehicle to maintain a selected vehicle cruising speed. The present invention is directed to a cruise control apparatus which achieves such control by adjusting the throttle position of an internal combustion engine with an electric motor. In normal operation, the electric motor is inactive and the driver of the vehicle controls the position of the throttle by manipulating an accelerator pedal mechanically coupled thereto. In cruise control operation, the driver releases the accelerator pedal, and the electric motor is activated to suitably adjust the throttle position for maintaining the selected vehicle speed.

A hallmark of any cruise control apparatus is that the throttle control is automatically released upon driver actuation of the vehicle service brakes. Such a release disclosed for example in document EP-A-0 026 656, is referred to herein as a brake-initiated release. In electric motor driven arrangements, the release may be achieved by de-clutching the electric motor from the throttle. While this achieves a quick release of the cruise control, the accompanying movement of the accelerator pedal can produce an annoying noise, referred to herein as pedal slap.

The present invention is directed to an improved electric motor driven cruise control apparatus having a clutch mechanism connected between the electric motor and the engine throttle and a progressive brake-initiated release of the throttle control which avoids the production of objectionable pedal slap noise.

To this end, the invention provides an apparatus as set forth in claim 1.

According to this invention, release of the throttle control upon actuation of the vehicle service brakes is initiated by using the electric motor to drive the engine throttle toward its closed (rest) position while maintaining engagement of the clutch mechanism. If the duration of the brake actuation exceeds a reference interval sufficiently long as to indicate potentially significant braking effort, the clutch mechanism is immediately disengaged to return the engine throttle to its closed position without further delay. If the duration of the brake actuation is less than the reference interval, engagement of the clutch mechanism is maintained until the electric motor has returned the engine throttle to its rest position.

The progressive release provided by this invention thereby eliminates the production of pedal slap noise in response to brief actuation of the service brakes. When the braking is prolonged, and therefore potentially significant, the pedal slap noise is at least lessened due to the initial progressive release during the reference interval.

The present invention will now be described, by way of example, with reference to the accompanying drawings, in which:-

Figure 1 is a block diagram of an electric motor driven cruise control apparatus including a computer based controller for carrying out the control functions of this invention and a stepper motor;

Figures 2 - 5 are circuit diagrams depicting certain of the functional blocks of Figure 1 in more detail;

Figure 6 graphically depicts the stator winding voltage of the stepper motor of Figure 1;

Figure 7 graphically depicts the energization frequency adjustment as a function of the error between the detected zero crossing and the optimum zero crossing as mechanized in a sampling arrangement; and

Figures 8 - 14 set forth flow diagrams representative of computer program instructions executed by the computer based controller of Figure 1 in carrying out the control functions of this invention.

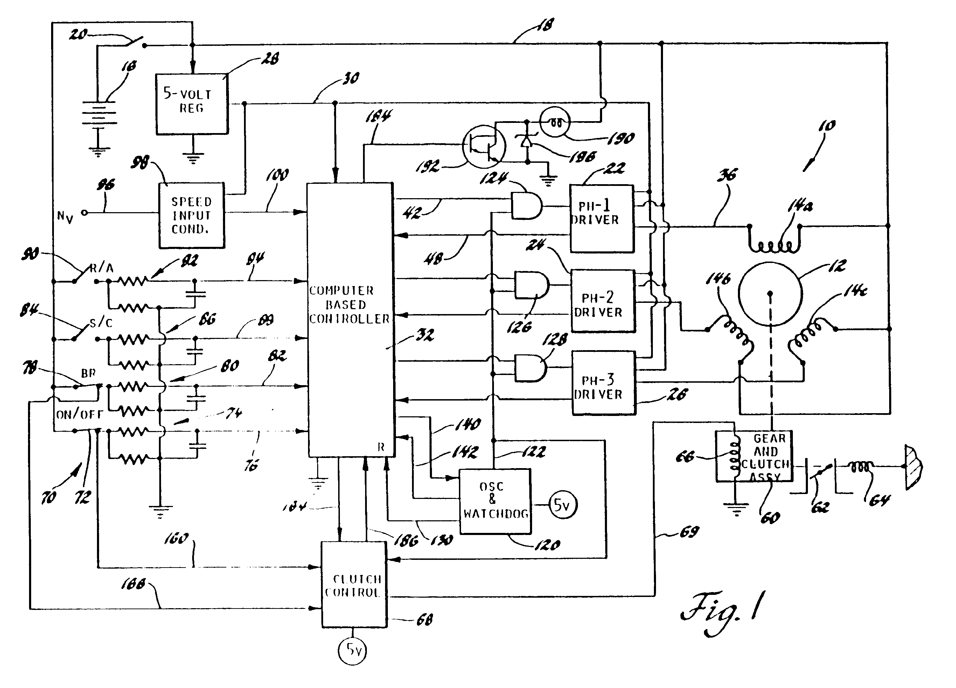

Referring now to the drawings, and more particularly to Figure 1, a stepper motor 10 is shown having a permanent magnet rotor 12 and stator windings 14a - 14c which are three-phase WYE-connected. One terminal of each stator winding 14a - 14c is connected to the positive terminal of the vehicle storage battery 16 via line 18 and an ignition switch 20. The other terminal of stator winding 14a is connected to the phase driver 22; the other terminal of stator winding 14b is connected to the phase driver 24; and the other terminal of stator winding 14c is connected to the phase driver 26.

The phase drivers 22 - 26 and various other circuit blocks depicted in Figure 1 are operated at a relatively low voltage (such as 5 volts) as provided by the voltage regulator 28 on the line 30. The connection of such voltage to certain of the circuit blocks is indicated by the circled 5V designation.

Phase drivers 22 - 26 each include a power switching device which is turned on and off by a computer based controller 32 to alternately energize and deenergize the respective stator windings 14a - 14c in predetermined sequence for producing a rotating magnetic field in the stator of stepper motor 10. The phase drivers 22 - 26 are essentially the same, the phase driver 22 being shown in greater detail in Figure 3. As set forth therein, the phase driver 22 comprises a power field effect transistor (FET) 34 connected between the stator winding 14a and ground potential via line 36, a freewheeling diode 38 for circulating inductive energy stored in the stator winding 14a at turn-off, and a zero crossing detector circuit 40. The power FET 34 is biased on and off by the computer based controller 32 via line 42, which is connected to the gate of power FET 34 through the AND gate 124.

The zero crossing detector circuit 40 includes a comparator 46 which compares an offset of the phase winding voltage with a reference voltage, thereby to provide computer based controller 32 with a zero crossing indication on line 48. The winding voltage is applied to the noninverting input of comparator 46 through a voltage divider comprising the resistors 50 and 52. The reference voltage is defined by a voltage divider comprising the resistors 54 and 56.

In view of the above, it will be recognized that the point of "zero crossing" as used herein is defined as the point at which the induced phase winding voltage crosses the neutral voltage at the WYE, or common, point of the stator windings 14a - 14c. In the illustrated embodiment, the WYE (common) point is maintained at the positive voltage of vehicle storage battery 16, and the zero crossing is detected by comparing the induced voltage with the positive battery voltage. It should be recognized, however, that this invention extends equally to an alternative embodiment wherein the WYE point is grounded and the phase drivers 22 - 26 selectively connect the stator windings 14a - 14c to positive battery voltage. In such case, the "zero crossing would be detected by comparing the induced voltage with ground potential.

The permanent magnet rotor 12 of stepper motor 10 is mechanically connected through a reduction gearset and clutch assembly 60 to an engine throttle 62. A return spring 64 biases engine throttle 62 (which together define a mechanical load) toward a closed position, and stepper motor 10 must overcome the spring force to open engine throttle 62. The clutch of reduction gearset and clutch assembly 60 is selectively activated by a solenoid coil 66 to make or break the mechanical connection between permanent magnet rotor 12 and engine throttle 62. The energization of solenoid coil 66 is controlled by a clutch control circuit 68 via line 69, the clutch control circuit being described in greater detail below in reference to Figure 2. A reduction gearset and clutch assembly meeting the above description is set forth in detail in our published European patent application no. 0202789, which is incorporated herein by reference.

The reference numeral 70 generally designates a plurality of driver input circuits pertinent to vehicle speed control. Each driver input circuit 70 is connected between the downstream side of ignition switch 20 and the computer based controller 32. An ON/OFF switch 72 is computer based connected to the controller 32 through RC network 74 and input line 76. ON/OFF switch 72 is actuated by the driver to enable or disable the vehicle speed control function. The brake (BR) switch 78 is connected to the computer based controller 32 through RC network 80 and input line 82. Brake switch 78 is normally closed, and is opened whenever the service brakes of the vehicle are operated. The set/coast (S/C) switch 84 is connected to the computer based controller 32 through RC network 86 and input line 88. S/C switch 84 is normally open and is closed momentarily or continuously by the driver to set a desired vehicle speed or to coast to a slower vehicle speed. The resume/accel (R/A) switch 90 is connected to the computer based controller 32 through RC network 92 and input line 94. R/A switch 90 is normally open and is closed momentarily or continuously by the driver to resume a previously set speed or to accelerate to a higher vehicle speed.

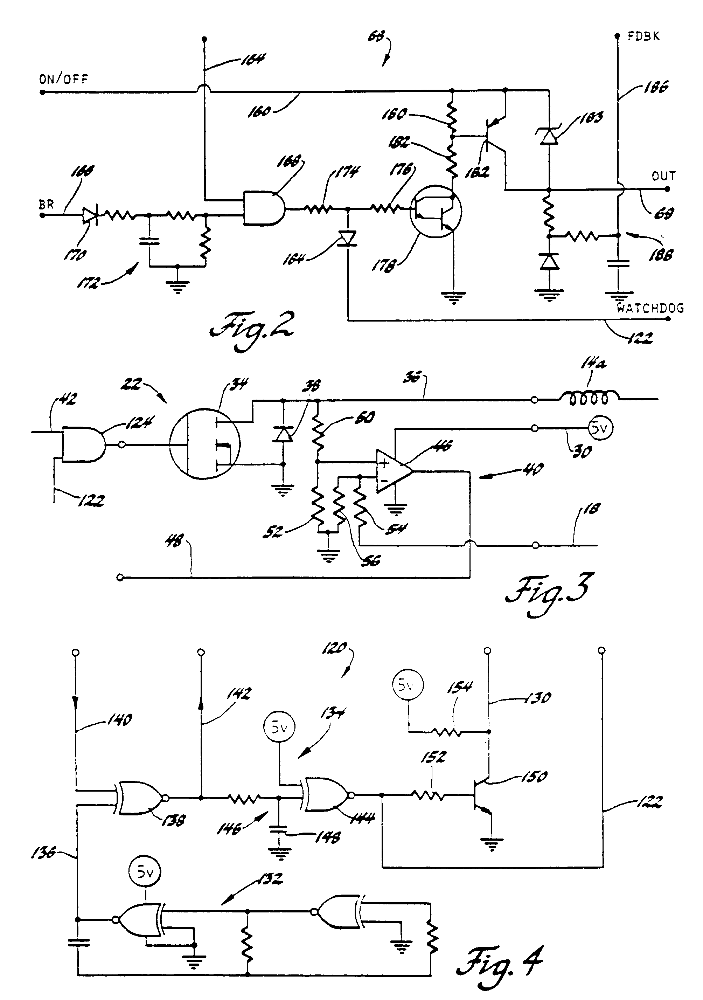

A vehicle speed signal $N_v$ on line 96 is applied to input conditioning circuit 98 which supplies a vehicle speed feedback signal to computer based controller 32 via input line 100. As set forth in Figure 5, the input conditioning circuit 98 includes a capacitor 102 which is charged by the 5-volt supply through the resistor 104 and discharged by the vehicle speed signal $N_v$ through resistor 106 and diode 108. The capacitor 110 is for transient suppression. The voltage across capacitor 102 thereby provides an indication of the vehicle speed, and is applied to the inverting input of operational amplifier 112. An offset voltage defined by voltage divider resistors 114 and 116 is applied to the noninverting input of operational amplifier 112. Accordingly, the output voltage of operational amplifier 112 on input line 100 provides an offset indication of the vehicle speed $N_v$.

A watchdog circuit 120 cooperates with the computer based controller 32 in a conventional manner to detect the occurrence of a controller malfunction. In the event of a malfunction, the watchdog circuit 120 operates to deenergize the stator windings 14a - 14c via line 122 and AND gates 124 - 128, to disengage the clutch of reduction gearset and clutch assembly 60 via line 122 and clutch control circuit 68, and to reset the computer based controller 32 via line 130. As set forth in Figure 4, watchdog circuit 120 comprises an RC oscillator 132 and a reset logic circuit 134. RC oscillator 132 has an operating frequency of approximately 25 Hz, and its output on line 136 is applied as an input to exclusive NOR gate 138. The other input to the NOR gate 138 is supplied by computer based controller 32 on line 140. The output of NOR gate 138 is applied as an input to computer based controller 32 via line 142, and also as an input to exclusive NOR gate 144 through the RC network 146.

The periodic voltage transitions on line 142 signal the computer based controller 32 to drive the line 140 to the same voltage level. Until the computer based controller 32 responds, the output of exclusive NOR gate 138 falls to a logic zero voltage potential, allowing the capacitor 148 of RC network 146 to discharge.

In normal operation, the computer based controller 32 quickly responds to the voltage transitions on line 142, and the output of exclusive NOR gate 138 is returned to a logic one voltage potential. Since the output of NOR gate 138 is low for only a short period of time, the capacitor 148 remains charged at a relatively high voltage level, and the output of exclusive NOR gate 144 is maintained at a logic one voltage potential. Transistor 150, which is connected to the output of NOR gate 144 through resistor 152, is maintained conductive, holding the reset input (R) of computer based controller 32 substantially at ground potential.

If a malfunction prevents computer based controller 32 from properly responding to the voltage transitions on line 142, NOR gate 138 remains at a logic zero voltage potential, and capacitor 148 becomes substantially discharged. As a result, the output of NOR gate 144 falls to a logic zero voltage potential. At such point, line 122 signals the AND gates 124 - 128 to deenergize stator windings 14a - 14c, and the clutch control circuit 68 to disengage the clutch of reduction gearset and clutch assembly 60. In addition, transistor 150 is biased nonconductive, and a resistor 154 raises line 130 to a relatively high voltage potential to effect a reset of the computer based controller 32. The voltage transitions on line 142 continue to occur, and when the computer based controller 32 properly responds thereto, the watchdog circuit 120 operates as described in the previous paragraph.

The clutch control circuit 68 depicted in Figure 2 controls the energization of solenoid coil 66 via line 69. The energization current for solenoid coil 66 is supplied from the downstream side of ON/OFF switch 72 through line 160 and the emitter-collector circuit of transistor 162. As such, the stepper motor 10 can only effect adjustment of engine throttle 62 when the ON/OFF switch 72 is closed. Whenever the ON/OFF switch 72 is moved to the OFF position (opened) the solenoid coil 66 is deenergized, and the engine throttle 62 returns to a position dependent upon the accelerator pedal linkage (if any) and the return spring 64. A Zener diode 163 protects the transistor 162 when the solenoid coil 66 is deenergized.

Whenever the ON/OFF switch 72 is closed, the energization of solenoid coil 66 is controlled in accordance with a clutch command signal provided by the computer based controller 32 on line 164 and a brake switch signal on line 166. The brake switch signal is obtained from the downstream side of brake switch 78, which is closed when the service brakes are not in use and open when the service brakes are being applied. The clutch command signal on line 164 is applied directly as an input to an AND gate 168; the brake signal on line 166 is applied as an input to AND gate 168 through a diode 170 and a RC network 172. The output of AND gate 168 is applied through resistors 174 and 176 to the base terminal of Darlington transistor 178 for controlling its conduction. The output circuit of Darlington transistor 178 is connected to the base terminal of transistor 162 through a voltage divider comprising resistors 180 and 182.

So long as the ON/OFF switch 72 is closed and the service brakes are not applied, the output of AND gate 168, and hence the conduction of Darlington transistor 178 and transistor 162, is controlled in accordance with the clutch command signal on line 164. The solenoid coil 66 is energized to engage the clutch if the clutch command signal is high, and deenergized to disengage the clutch if the clutch command signal is low. However, when the service brakes are applied, the brake switch 78 opens, and after a brief delay effected by the RC network 172, the output of AND gate 168 falls to a logic zero voltage level to deenergize the solenoid coil 66. A similar override of the clutch command signal on line 164 is effected by the watchdog circuit 120 in the event of a controller malfunction. The line 122 is connected to the junction of resistors 174 and 176 through a diode 184, and serves to independently bias the Darlington transistor 178 and transistor 162 nonconductive to deenergize the solenoid coil 66.

A feedback signal indicative of the state of clutch control circuit 68 is provided to computer based controller 32 on line 186. The feedback signal is generated by a diode and RC network 188, which provides a filtered indication of the voltage on line 69.

In addition to controlling the energization of stator windings 14a - 14c and the solenoid coil 66, the computer based controller 32 operates a driver indicator lamp 190. Essentially, the driver indicator lamp 190 is lit whenever the vehicle speed control function is active. The driver indicator lamp 190 is connected between the (battery supply) line 18 and ground potential via a Darlington transistor 192, and computer based controller 32 controls the conduction of Darlington transistor 192 via line 194. A zener diode 196 protects Darlington transistor 192 from damage due to voltage transients.

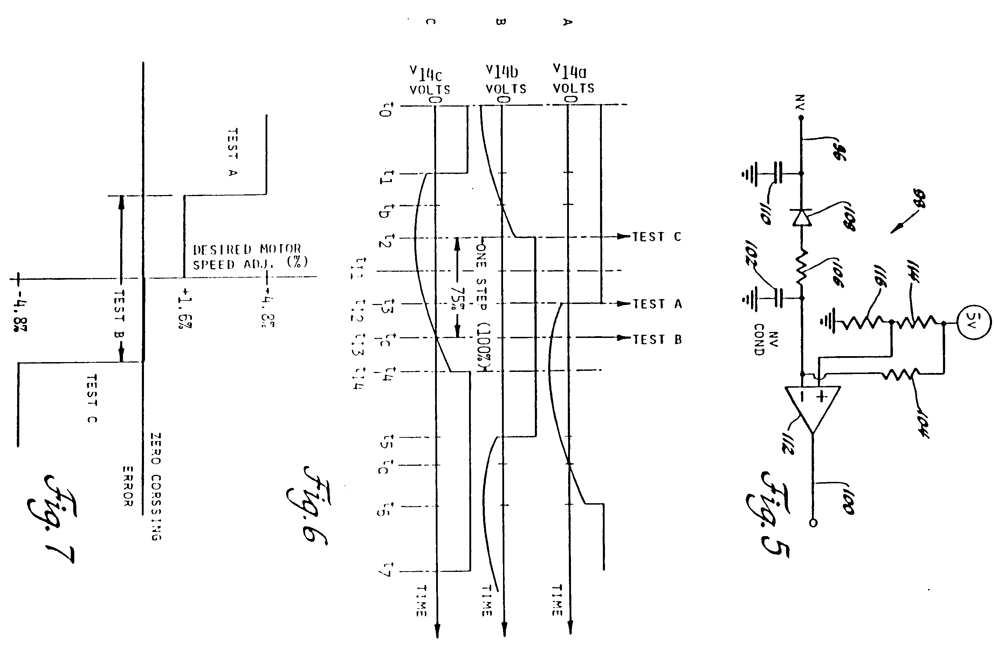

Graphs A - C of Figure 6 depict idealized voltage waveforms for one complete energization sequence of the stator windings 14a - 14c on a common time base. Graph A depicts the voltage $V_{14a}$ appearing across stator winding 14a; Graph B depicts the voltage $V_{14b}$ appearing across stator winding 14b; and Graph C depicts the voltage $V_{14c}$ appearing across stator winding 14c. Stator winding 14a is energized during the interval $t_0$ - $t_3$; stator winding 14b is energized during the interval $t_2$ - $t_5$; and stator winding 14c is energized during the intervals $t_0$ - $t_1$ and $t_4$ - $t_7$. The winding voltages which occur between the energization intervals are induced by the rotation of permanent magnet rotor 12, and are conventionally referred to herein as induced or back-EMF. The back-EMF appearing across each stator winding 14a - 14c is negative in polarity just after the respective stator winding is deenergized, and then becomes positive in polarity before the stator winding is energized again. The point at which the back-EMF changes from negative to positive polarity is referred to herein as the point of zero crossing.

The present invention is founded on the notion that in control applications having variable load torque, there is an optimum point of zero crossing which may be empirically determined for maximizing the motor speed for the existing load torque while retaining the ability to respond to a predetermined level of load torque variation. The stator winding energization frequency -- that is, the energization sequence repetition rate -- is adjusted in closed loop fashion so that the actual point of zero crossing in each stator winding 14a - 14c occurs at or near the optimum point of zero crossing. The predetermined level of load torque variation the stepper motor 10 can respond to depends on the speed of response of the frequency adjustment. In physical terms, the point of zero crossing corresponds to the amount by which the permanent magnet rotor 12 lags the phase sequence of the stator winding energization.

In a mechanization of the invention substantially as depicted in Figure 1, the energization frequency was controlled so as to cause the zero crossing to occur approximately 75% of the way through a respective energization sequence step. In this regard, a complete motor step is defined as the interval between the beginning of energization in two successively energized stator windings. The intervals $t_0$ - $t_2$, $t_2$ - $t_4$, and $t_4$ - $t_6$ each define a complete energization sequence step. Accordingly, the zero crossing for stator winding 14a occurs at time $t_a$ as shown in Graph A of Figure 6. Similarly, the zero crossing for stator winding 14b occurs at time $t_b$, and the zero crossing for stator winding 14c occurs at time $t_c$ -- in each case, 75% of the way through the respective energization sequence step. While it will be recognized that the optimum zero crossing point depends on load conditions, the target zero crossing of 75% is referred to herein as the optimum point of zero crossing.

If the actual point of zero crossing occurs prior to the optimum point of zero crossing, the stepper motor 10 could handle the load torque at a higher speed. In such case the computer based controller 32 operates to increase the winding energization frequency to increase the motor speed. If the actual point of zero crossing occurs after the optimum point, the motor speed is too great to reliably handle the load torque without loss of synchronization (slippage), and the stator winding energization frequency is reduced to reduce the motor speed. In this way, the stator winding energization frequency is adaptively adjusted to changing load conditions, and the stepper motor 10 runs at the highest speed for ensuring reliable positioning of the engine throttle 62.

In the embodiment of this invention illustrated herein, the computer based controller 32 periodically executes a routine that tests for zero crossings and adjusts the energization frequency if required. In particular, three zero crossing tests are performed in each motor step. The first test, referred to herein as TEST C, occurs at the onset of the motor step -- that is, when a respective stator winding is first energized. If the back-EMF zero crossing of that phase has not yet occurred, the motor speed is much too fast, and the computer based controller 32 effects a relatively large decrease in the motor speed command, referred to hereinafter as the desired motor speed.

The second test, referred to herein as TEST A, is only performed during motor starting, and occurs at the midpoint of the motor step. If the back-EMF zero crossing of the upcoming stator winding (that is, the stator winding about to be energized) has already occurred, the motor speed is much too slow, and the computer based controller 32 effects a relatively large increase in the desired motor speed.

The third test, referred to herein as TEST B, occurs at the desired point of zero crossing -- that is, 75% of the way through the motor step. If the back-EMF zero crossing of the upcoming stator winding has occurred, the motor speed is a little too slow, and the computer based controller 32 effects a relatively small increase in the desired motor speed. No decrease is effected if the zero crossing has not yet occurred. Referring by way of example to the motor step defined by the interval $t_2$ - $t_4$ in Figure 6, the TEST C pertains to the occurrence of zero crossings prior to time $t_2$, the TEST A pertains to zero crossings prior to time $t_3$, and the TEST B pertains to zero crossings prior to time $t_c$.

In Figure 7, the adjustments to desired motor speed are graphically illustrated as a function of the amount by which the sensed zero crossing deviates from the optimum zero crossing -- in other words, the zero crossing error. Negative error indicates that the sensed zero crossing occurred prior to the optimum zero crossing; positive error indicates that the sensed zero crossing occurred after the optimum zero crossing. As shown in the graph, the increases and decreases in desired motor speed effected by TEST A and TEST B amount to an adjustment of approximately 4.8%. The increase effected by TEST B amounts to an adjustment of approximately 1.6%. These values were chosen so as to maximize stability and motor acceleration during starting, and also to facilitate implementation of the speed adjustments with a digital computer.

Prior to the starting of the stepper motor 10, the permanent magnet rotor 12 is stationary and no back-EMF is induced in the stator windings 14a - 14c. To enable starting, desired motor speed is preset to a relatively low starting rotational rate. If forward motor rotation is required, the stepper motor 10 must work against the return spring 64, and the starting speed is initialized at a relatively low value such as 50 steps per second. If reverse motor rotation is required, the return spring 64 aids the stepper motor 10, and the starting speed is initialized at a higher value, such as 100 steps per second. During the starting period when the actual motor speed is less than or equal to the starting speed, all three zero crossing tests A, B, and C are enabled so as to adjust the desired motor speed in accordance with the ability of the stepper motor 10 to accelerate the load. However, the TEST A is inhibited when the motor speed increases above the starting speed. This is because at higher motor speeds, the interrupts, and therefore the zero crossing tests, occur at a relatively high frequency. Under such conditions, large increases in the desired motor speed are both unnecessary and undesirable in terms of stability. The large decreases in desired motor speed effected by TEST C are retained in order to retain the ability of the stepper motor 10 to respond to large increases in the load torque without substantial loss of synchronism.

The flow diagrams of Figures 8 - 14 represent computer program instructions executed by the computer based controller 32 in carrying out the control functions of this invention. The flow diagram of Figure 8 represents a main or background program loop which reads the circuit inputs, services the watchdog circuit 120, and determines the desired motor position. The remaining flow diagrams pertain to an interrupt service routine and various subroutines called thereby in response to a timer generated interrupt to update the motor status and to adjust the desired motor speed, if necessary.

Referring now more particularly to Figure 8, the reference numeral 200 designates an initialization routine executed at the initiation of each period of vehicle operation for setting various operating parameters and registers to an initial value. For example, the actual motor position register, M-POS-ACT, is set equal to zero; the desired motor speed register, M-SPD-DES, is set equal to the forward starting speed of 50 steps/second; and the interrupt timer is initialized to one-quarter step, based on the starting speed of 50 steps/second.

The flow diagram blocks 202 - 206 service the watchdog circuit 120. Decision block 202 directs the reexecution of the initialization block 200 if watchdog circuit 120 signals a reset via line 130. If a reset has not occurred, decision block 204 checks the (watchdog circuit output) line 142 to determine if a voltage transition has occurred. If so, an instruction block 206 is executed to service the watchdog circuit 120 by generating a corresponding voltage transition on the line 140. As described above in reference to Figure 4, such servicing of watchdog circuit 120 prevents the generation of a reset signal on line 130.

An instruction block 208 serves to read the various inputs described in reference to Figures 1 - 5, including the vehicle speed signal $N_v$, the driver operated switch information, and the zero cross detector information. An instruction block 210 represents a routine which evaluates the various inputs and determines a desired motor position M-POS-DES for bringing the actual vehicle speed into correspondence with the desired vehicle speed. This algorithm may be fairly conventional and is based, at least in part, on the magnitude and direction of vehicle speed error, and previously determined empirical relationships between throttle position and vehicle accelerating torque. Further detail pertaining to the development of the desired motor position is not given herein, as this invention pertains primarily to the remainder of the control algorithm. Following the execution of instruction block 210, the flow diagram blocks 202 - 210 are reexecuted, as indicated by a flow diagram line 212.

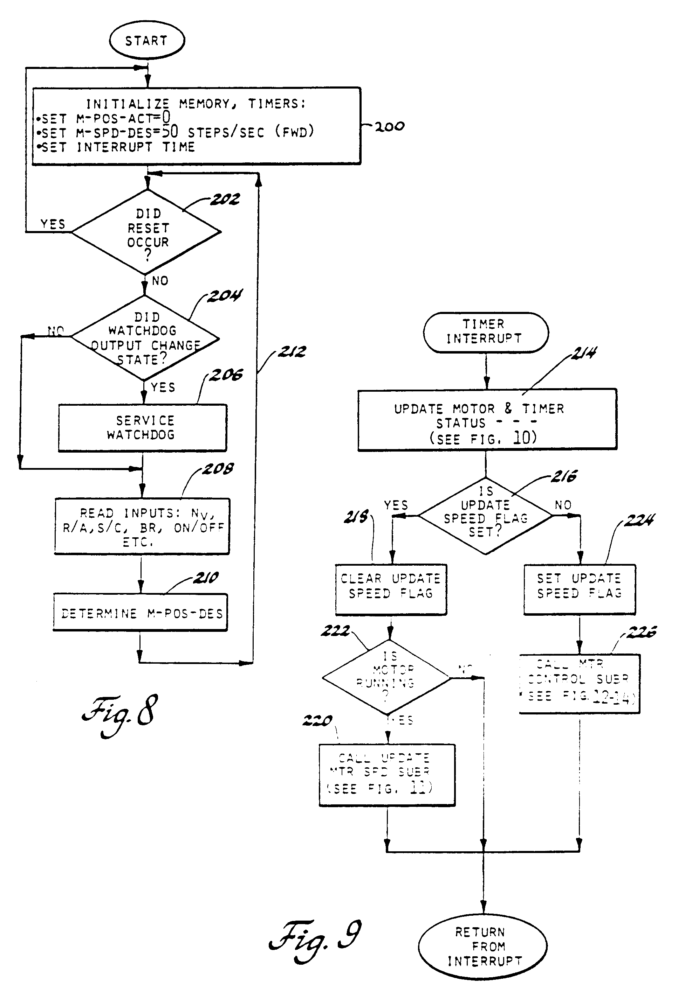

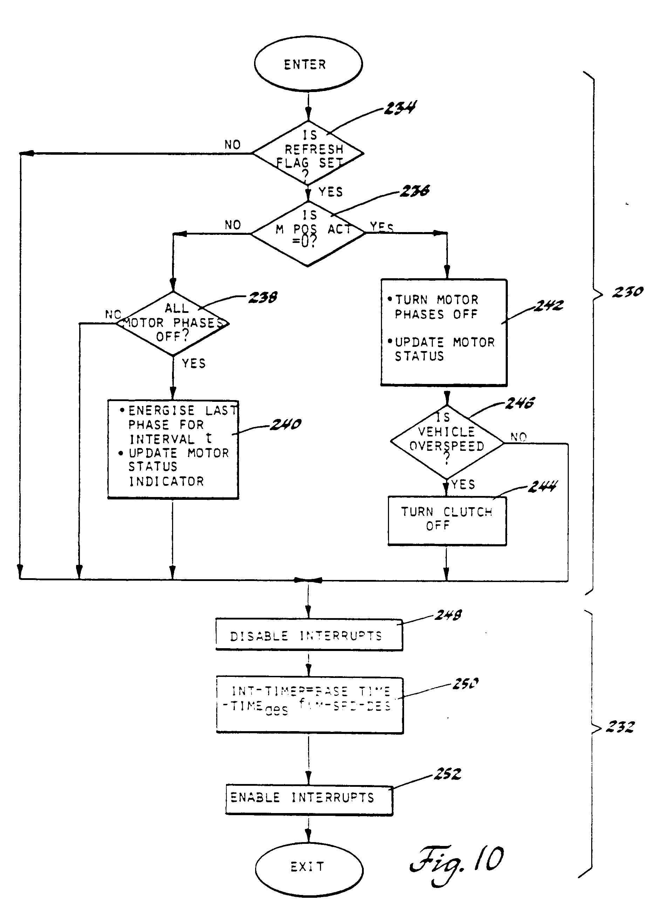

The flow diagram of Figure 9 broadly sets forth the routine executed by computer based controller 32 in response to the timer generated interrupts. As set forth above, the interrupts occur four times per motor step. At each such occurrence, the stepper motor 10 and timer status is updated, as indicated generally at block 214. This function is set forth in greater detail in the flow diagram of Figure 10, as indicated.

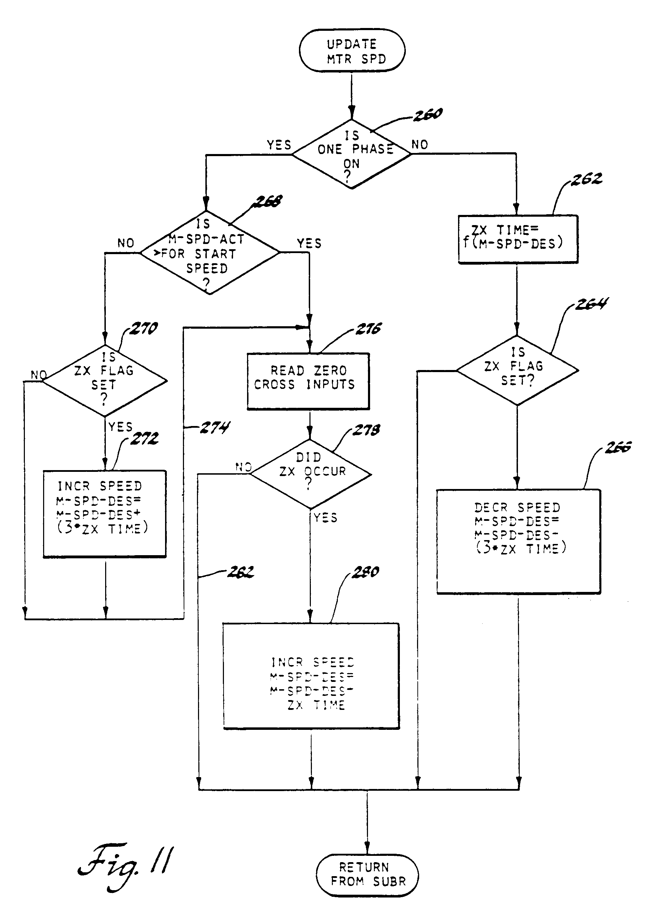

Thereafter, a decision block 216 is executed to determine if the UPDATE SPEED FLAG is set. If so, an instruction block 218 is executed to clear the UPDATE SPEED FLAG so that in the next execution of the interrupt service routine, decision block 216 will be answered in the negative. In addition, the instruction block 220 is executed to call a subroutine, UPDATE MTR SPD, for updating the motor speed if the stepper motor 10 is running, as determined at decision block 222. The UPDATE MTR SPD subroutine is set forth in greater detail in the flow diagram of Figure 11, as indicated.

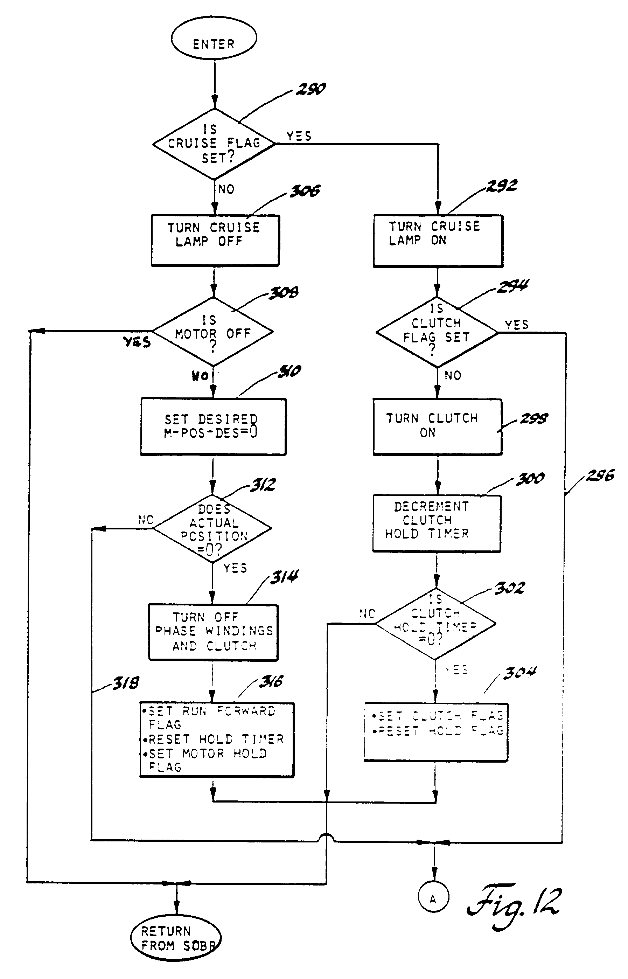

If the decision block 216 is answered in the negative, an instruction block 224 is executed to set the UPDATE SPEED FLAG so that in the next execution of the interrupt service routine, decision block 216 will be answered in the affirmative. In addition, an instruction block 226 is executed to call a subroutine, MTR CONTROL, for advancing phase winding energization and performing motor control. The MTR CONTROL subroutine is set forth in greater detail in the flow diagrams of Figures 12 - 14, as indicated. After the appropriate subroutine has been executed, the computer based controller 32 returns to execution of the main or background loop described above in reference to the Figure 8.

The flow diagram of Figure 10 is executed at each timer interrupt to update the stepper motor 10 and interrupt timer status, as indicated above in reference to Figure 9. The flow diagram comprises a refresh portion 230 and a timer adjustment portion 232. The refresh portion 230 determines if the stepper motor 10 has been stopped, as indicated by the status of a REFRESH flag. If a decision block 234 determines that the REFRESH flag is not set (motor running), the remainder of the refresh portion 230 is skipped. If the REFRESH flag is set (motor stopped), a decision block 236 is executed to determine if the stepper motor 10 is in the "zero throttle" position -- that is, if the stepper motor 10 is not being subjected to load torque. If the stepper motor 10 is not in the "zero throttle" position, the last energized stator windings are intermittently energized at a relatively low duty cycle in order to develop sufficient holding torque to prevent normal load torque from changing the rotor position. This operation is referred to herein as a refresh function. The duty cycling during the refresh function also avoids excessive power consumption and heat generation. The refresh function is skipped if the stepper motor 10 is in its "zero throttle" position.

If the REFRESH flag is set and the stepper motor 10 is holding the engine throttle 62 at a position other than its rest position, a decision block 238 is executed to determine if all of the stator windings 14a - 14c have been deenergized. If so, an instruction block 240 is executed to energize the appropriate stator winding 14a - 14c for a predetermined interval t, and to update a motor status indicator accordingly.

If the REFRESH flag is set and the stepper motor 10 is in the "zero throttle position", an instruction block 242 is executed to deenergize the stator windings 14a - 14c, and to update the motor status indicator accordingly. In addition, an instruction block 244 is executed to deenergize the solenoid coil 66 to disengage the servo clutch if a vehicle overspeed condition is detected at decision block 246.

The timer adjustment portion 232 comprises instruction blocks 248 - 252. The instruction blocks 248 and 252 serve to temporarily interrupt the servicing of further timer interrupts while the instruction block 250 is executed to update the interrupt timer, INT-TIMER. As indicated at instruction block 250, the interval timed by the INT-TIMER is determined according to the difference between a BASE TIME and a time, $TIME_{des}$, related to the desired motor speed, M-SPD-DES so that the interrupt frequency varies in direct relation to the desired motor speed, M-SPD-DES.

As indicated above, the timer interrupts occur four times per motor step. In response to the first and third such interrupts, the computer based controller 32 executes the UPDATE MTR SPD subroutine of Figure 11 to update the desired motor speed term, M-SPD-DES. In response to the second and fourth such interrupts, the computer based controller 32 executes the MTR CONTROL subroutine of Figures 12 - 14 to appropriately energize the stator windings 14a - 14c. Referring by way of example to Figure 6, the first through fourth interrupts for the motor step designated by the interval $t_2$ - $t_4$ occur at times $t_{i1}$ - $t_{i4}$, respectively.

In response to the first interrupt at time $t_{i1}$, the UPDATE MTR SPD subroutine is executed to evaluate the TEST C as described above in reference to Figure 6 and below in reference to Figure 11. In response to the second interrupt at time $t_{i2}$, the MTR CONTROL subroutine is executed to determine if a back-EMF zero crossing has occurred in stator winding 14c (for upcoming TEST A), and to deenergize stator winding 14a. In response to the third interrupt at time $t_{i3}$, the UPDATE MTR SPD subroutine is executed to evaluate the TESTS A and B (depending on motor speed) as described above in reference to Figure 6 and below in reference to Figure 11. In response to the fourth interrupt at time $t_{i4}$, the MTR CONTROL subroutine is executed to determine if a back-EMF zero crossing has occurred in stator winding 14c (for upcoming TEST C), and to energize the stator winding 14c.

Referring now more particularly to the UPDATE MTR SPD subroutine of Figure 11, a decision block 260 is first executed to determine if just one stator winding is enabled. This may be determined from the motor status indicator referred to above. In the first subroutine execution per motor step, the decision block 260 is answered in the negative, because two stator windings will be on. This may be seen in reference to the Graphs A - C of Figure 6. At such point, an instruction block 262 is executed to compute a proportional adjustment term, ZX TIME, as a function of the desired motor speed, M-SPD-DES. In the illustrated embodiment, the terms ZX TIME has a value of approximately 1.6% of the desired motor speed as indicated above in reference to Figure 7. Thereafter, a decision block 264 is executed to determine if a back-EMF zero crossing occurred prior to the energization of the most recently energized stator winding. This is determined by the status of a ZX flag, such flag being set or reset by the MTR CONTROL subroutine described below. If the ZX flag is set, a zero crossing has occurred, and the computer based controller 32 returns to the interrupt service routine of Figure 9 without making a desired motor speed adjustment. If the ZX flag is not set, no zero crossing occurred, and instruction block 266 is executed to effect a relatively large decrease in the desired motor speed according to the expression:

$$M - SPD - DES = M - SPD - DES - (3 * ZX \ TIME)$$

In the illustrated embodiment wherein the term ZX TIME has a value of approximately 1.6% of the desired motor speed, the TEST C thereby effects a desired motor speed decrease of approximately 4.8%.

When the UPDATE MTR SPD subroutine is subsequently executed in the given motor step, the decision block 260 is answered in the affirmative as only one phase winding will be enabled. This signals the evaluation of TEST A and/or TEST B. If the motor speed is less than or equal to the forward starting speed (50 steps per second in the illustrated embodiment) as determined at decision block 268, both TEST A and TEST B are evaluated. If the motor speed is greater than the starting speed, the evaluation of TEST A is inhibited, and only TEST B is evaluated.

The evaluation of TEST A involves a determination as to whether a back-EMF zero crossing occurred in the stator winding about to be enabled prior to the last timer interrupt. This determination is made by decision block 270, which checks the status of the ZX flag. As indicated above, the ZX flag is set or reset by the MTR CONTROL subroutine in response to a prior timer interrupt. If a zero crossing did occur before the last timer interrupt, the motor speed is much too slow, and an instruction block 272 is executed to effect a relatively large increase in the desired motor speed according to the expression:

$$M - SPD - DES = M - SPD - DES + (3 * ZX \ TIME)$$

In the illustrated embodiment wherein the term ZX TIME has a value of approximately 1.6% of the desired motor speed, the TEST A thereby effects a desired motor speed increase of approximately 4.8%. If the decision block 270 is answered in the negative, the execution of instruction block 272 is skipped as indicated by flow diagram line 274, and the computer based controller 32 proceeds to evaluate TEST B.

As with TEST A, TEST B involves a determination as to whether a back-EMF zero crossing has occurred in the stator winding about to be enabled. However, the TEST B is concerned with whether the zero crossing has occurred in the interval since the last timer interrupt. This information is not indicated by the status of the ZX flag. Rather, the instruction block 276 and decision block 278 are executed to read the zero crossing inputs supplied to computer based controller 32 by the appropriate phase driver 22 - 26, and to direct the execution of instruction block 280 if a zero crossing occurred. The instruction block 280 operates to increase the desired motor speed by a relatively small amount according to the expression:

$$M - SPD - DES = M - SPD - DES + ZX \ TIME$$

In the illustrated embodiment wherein the term ZX TIME has a value of approximately 1.6% of the desired motor speed, the TEST B thereby effects a desired motor speed increase of approximately 1.6%. If a zero crossing did not occur, the execution of instruction block 280 is skipped, as indicated by the flow diagram line 282.

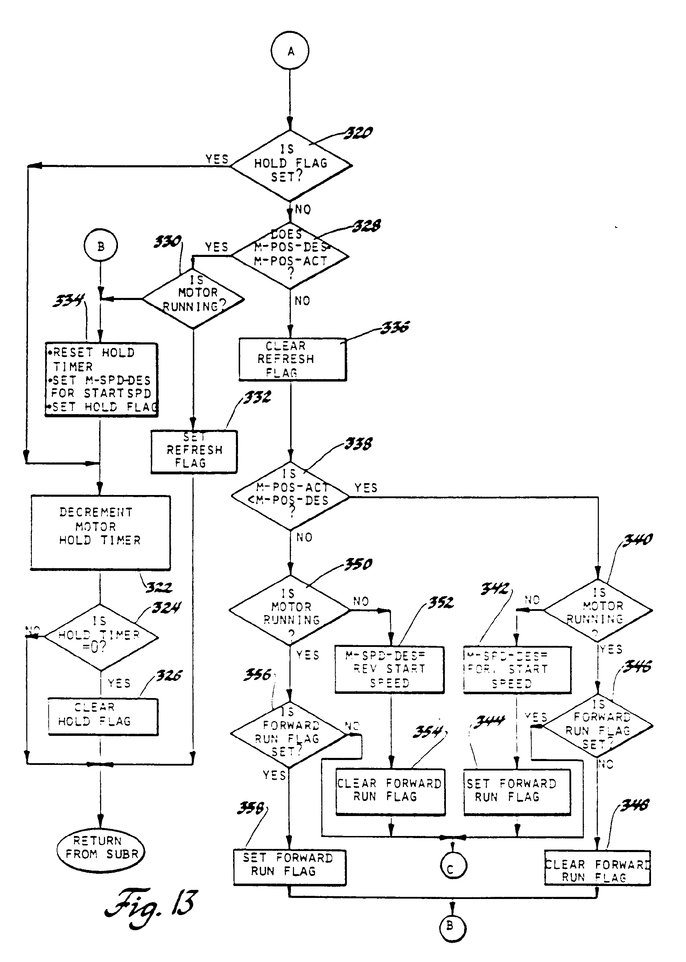

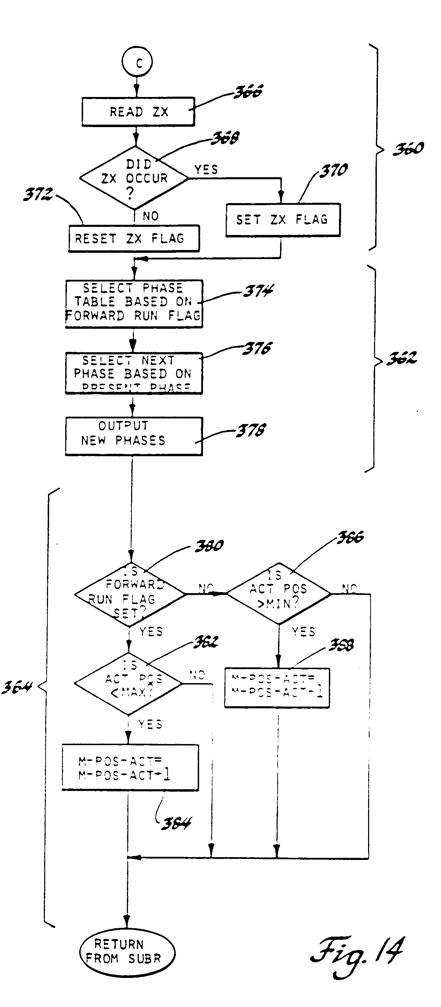

The MTR CONTROL subroutine depicted by the flow diagrams of Figures 12 - 14 serves primarily to appropriately energize the stator windings 14a - 14c and the solenoid coil 66, and to check for the occurrence of back-EMF zero crossings. Figure 12 relates primarily to clutch control logic; Figure 13 relates primarily to motor starting logic; and Figure 14 relates primarily to motor control, zero crossing detection and status updating. As indicated above in reference to the interrupt service routine of Figure 9, the MTR CONTROL subroutine is executed twice per motor step, at alternate timer interrupts.

The flow diagram of Figure 12 includes logic for engaging and disengaging the control of engine throttle 62. The CRUISE flag is set or reset by the background program of Figure 8 in accordance with status of the ON/OFF, Brake, S/C and R/A switches 72, 78, 84 and 90 respectively to indicate whether vehicle speed control is active.

If vehicle speed control is active, a decision block 290 is answered in the affirmative, and an instruction block 292 is executed to light the driver indicator lamp 190. Then, a decision block 294 is executed to determine if the clutch of reduction gearset and clutch assembly 60 has been engaged for at least a hold period, as indicated by the status of the CLUTCH flag. If so, the computer based controller 32 proceeds to the motor starting logic of Figure 13, as indicated by flow diagram line 296. If the clutch has not been engaged for at least a hold period, instruction blocks 298 - 300 are executed to energize the solenoid coil 66 and to decrement a count previously stored in a timer referred to herein as CLUTCH HOLD TIMER. Until the count in CLUTCH HOLD TIMER is decremented to zero, as determined by a decision block 302, the computer based controller 32 is returned to the interrupt service routine of Figure 9. When the interval counted by the CLUTCH HOLD TIMER has elapsed, an instruction block 304 is executed reset the HOLD flag and to set the CLUTCH flag, indicating that the clutch has been engaged for at least the hold period. Thereafter, the computer based controller 32 is returned to the interrupt service routine, and the subroutine does not enable stator winding energization.

If vehicle speed control is not active, the decision block 290 is answered in the negative, and instruction block 306 is executed to extinguish the driver indicator lamp 190. If the stepper motor 10 is off (no stator windings enabled), as determined at decision block 308, the engine throttle 62 has been released, and computer based controller 32 is returned to the interrupt service routine. If the stepper motor 10 is on, the instruction block 310 and the decision block 312 are executed to set the desired motor position, M-POS-DES, to zero, and to determine if the stepper motor has actually returned to the "zero throttle" position. If so, instruction blocks 314 - 316 are executed to disable the stator windings 14a - 14c and the solenoid coil 66, to set a RUN FORWARD flag, to store a predetermined count in a MOTOR HOLD TIMER, and to set a MOTOR HOLD flag. As described below, the MOTOR HOLD TIMER is used to prevent motor operation for a predetermined interval any time the motor direction of rotation is reversed, and the HOLD flag indicates whether the hold mode is in effect. If the stepper motor 10 has not yet attained the "zero throttle" position, the computer based controller 32 proceeds to the motor starting logic of Figure 13, as indicated by flow diagram line 318.

As indicated above, the flow diagram of Figure 13 relates primarily to motor starting logic. Decision block 320 is first executed to determine if the stepper motor 10 is in the hold mode, as indicated by the status of the HOLD flag. As explained in reference to Figure 12, the MOTOR HOLD TIMER is initialized to a predetermined count whenever the desired direction of motor rotation is reversed. If the hold mode is in effect, decision block 320 is answered in the affirmative, and an instruction block 322 is executed to decrement the MOTOR HOLD TIMER. When the MOTOR HOLD TIMER has been decremented to zero, as determined by a decision block 324, an instruction block 326 is executed to clear the HOLD flag. Thereafter, the computer based controller 32 is returned to the interrupt service routine of Figure 9.

If the stepper motor 10 is not in the hold mode, decision block 320 is answered in the negative, and a decision block 328 is executed to determine if the actual motor position (M-POS-ACT) is equal to the desired motor position (M-POS-DES). If so, decision block 330 is executed to determine if the stepper motor 10 is running. If the stepper motor 10 is not running, instruction block 332 is executed to set the REFRESH flag so that the refresh portion 230 of the interrupt service routine (Figure 10) will be activated in response to the next timer interrupt. As described above, the refresh routine serves to duty cycle the last enabled stator windings for developing holding torque which maintains the position of engine throttle 62. If the stepper motor 10 is running, an instruction block 334 is executed to set the desired motor speed M-SPD-DES equal to the forward starting speed of 50 steps per second for slowing the stepper motor 10 to a stop, to initialize the MOTOR HOLD TIMER, and to set the HOLD flag. Thereafter, the instruction and decision blocks 322 - 326 are executed to time the hold interval as described above.

If it is determined at decision block 328 that the actual motor position does not correspond with the desired motor position, an instruction block 336 is executed to clear the REFRESH flag, and the decision block 338 is executed to determine the required direction of motor rotation. If the actual position is less than the desired position, the stepper motor 10 must be operated in the forward direction to open engine throttle 62. If the actual position is greater than the desired position, the stepper motor 10 must be operated in the reverse direction to close engine throttle 62.

If motor operation in the forward direction is required, a decision block 340 is executed to determine if the stepper motor 10 is running. If the stepper motor 10 is not running, the instruction blocks 342 - 344 are executed to initialize the desired motor speed M-SPD-DES at the forward starting speed of 50 steps per second, and to set the FORWARD RUN flag before proceeding to the flow diagram of Figure 14. If the stepper motor 10 is running and the FORWARD RUN flag is set, as determined at decision block 346, the stepper motor is operating in the correct direction and the computer based controller 32 proceeds to the flow diagram of Figure 14. If the FORWARD RUN flag is not set, the stepper motor 10 is operating in the wrong direction, and an instruction block 348 is executed to clear the FORWARD RUN flag. Then, the instruction and decision blocks 334 and 322 - 326 are executed as indicated by the circled letter B to stop the stepper motor 10 and initiate a motor hold mode.

If motor operation in the reverse direction is required, a decision block 350 is executed to determine if the stepper motor 10 is running. If the stepper motor 10 is not running, instruction blocks 352 - 354 are executed to initialize the desired motor speed M-SPD-DES at the reverse starting speed of 100 steps per second, and to clear the FORWARD RUN flag before proceeding to the flow diagram of Figure 14. If the stepper motor 10 is running and the FORWARD RUN flag is not set, as determined at decision block 356, the stepper motor is operating in the correct direction and computer based controller 32 proceeds to the flow diagram of Figure 14. If the FORWARD RUN flag is set, the stepper motor 10 is operating in the wrong direction, and an instruction block 358 is executed to set the FORWARD RUN flag. Then, the instruction and decision blocks 334 and 322 - 326 are executed as indicated by the circled letter B to stop the stepper motor 10 and initiate a motor hold mode.

The flow diagram of Figure 14 includes a zero crossing detection portion 360, a stator winding energization portion 362, and a motor status portion 364. The zero crossing detection portion includes the instruction and decision blocks 366 - 372, and serves to read the zero crossing inputs supplied by phase drivers 22 - 26, to set the ZX flag if a back-EMF zero crossing occurred, and to reset the ZX flag if no zero crossing occurred. The stator winding energization portion 362 includes the instruction blocks 374 - 378, and serves to select the stator windings to be energized based on previously stored look-up table information, and to suitably control the phase drivers 22 - 26. The motor status portion 364 includes the instruction and decision blocks 380 - 388, and serves to update the actual motor position indicator, M-POS-ACT, in accordance with the new winding energization. If the FORWARD RUN flag is set (as determined at decision block 380), and the term M-POS-ACT indicates a position less than an upper limit position MAX (as determined at decision block 382), the instruction block 384 is executed to increment M-POS-ACT. Similarly, if the FORWARD RUN flag is not set, and the term M-POS-ACT indicates a position greater than a lower limit position MIN (as determined at decision block 386), the instruction block 388 is executed to decrement M-POS-ACT. Thereafter, the computer based controller 32 is returned to the interrupt service routine of Figure 9.

In the manner described above, the motor speed is adaptively adjusted in accordance with load torque variations so as to maximize the motor speed (and therefore the speed of response of the throttle operator) while retaining the ability to respond to some load torque variation without loss of synchronism. The speed adjustments are made both during starting and running operation so as to accelerate the stepper motor 10 to its steady state running speed as fast as the load torque will permit without loss of synchronism.

As indicated above, this invention has been described herein in reference to the illustrated embodiment wherein timed interrupts occur in synchronism with the motor operation, and the zero crossing error is evaluated at discrete intervals defined by the interrupts for effecting a motor speed adjustment if necessary. As also indicated above, the adaptive speed adjustment of this invention may be carried out with a circuit wherein interrupts occur in response to the detection of back-EMF zero crossings. In such a circuit the zero crossing error is determined at each such interrupt, and a speed adjustment is effected in proportion thereto.

## Claims

1. Apparatus for controlling throttle means of a motor vehicle upon actuation of a vehicle service brake, the throttle means including an electric motor (10) mechanically coupled to an engine throttle (62) of the motor vehicle through a selectively engageable clutch mechanism (60), the apparatus being characterised by first control means (78,32) effective in response to actuation of the vehicle service brake for energizing the electric motor (10) in a manner to return the engine throttle (62) to a rest position until the motor position indicates that said rest position has been substantially achieved (290,310-314); and second control means (78,168,66) effective in response to actuation of the vehicle service brake beyond a predetermined interval of time (172) to disengage the selectively engageable clutch mechanism (60), thereby interrupting the mechanical coupling between the electric motor (10) and the engine throttle (62).

2. Apparatus as claimed in Claim 1, wherein the first control means (78,32) generates a clutch command for maintaining engagement of the selectively engageable clutch mechanism (60) until the motor position indicates that the rest position has been substantially achieved; and wherein the second control means is effective to control engagement of the selectively engageable clutch mechanism (60) in accordance with the clutch command generated by the first control means during the predetermined interval of time (172).

3. Apparatus as claimed in Claim 2, wherein the second control means includes brake responsive means (78) for generating an override control signal if the service brake has been actuated beyond the predetermined interval of time (172); and clutch mechanism control means (68) responsive to the clutch command and the override control signal, and effective (1) in the absence of the override control signal to selectively engage the selectively engageable clutch mechanism (60) in accordance with the clutch command, and (2) in the presence of the override signal to disengage the clutch mechanism without regard to the clutch command.

4. A method of operation for controlling throttle means of a motor vehicle upon actuation of a vehicle service brake, the throttle means including an electric motor (10) mechanically coupled to an engine throttle (62) of the motor vehicle through a selectively engageable clutch mechanism (60), the method being characterized by the steps of energizing the electric motor (10) in response to actuation of the vehicle service brake in a manner to return the engine throttle (62) to a rest position until the motor position indicates that the rest position has been substantially achieved; and disengaging the selectively engageable clutch mechanism in response to actuation of the vehicle service brake beyond a predetermined interval of time, thereby interrupting the mechanical coupling between the electric motor (10) and the engine throttle (62).

**Patentansprüche**

1. Gerät zum Regeln eines Drosselmittels eines Motorfahrzeugs bei Betätigung einer Fahrzeugbetriebsbremse, wobei das Drosselmittel einen elektrischen Motor (10) einschließt, der mit einer Motordrossel (62) des Motorfahrzeugs durch einen selektiv in Eingriff bringbaren Kupplungsmechanismus (60) mechanisch gekoppelt ist, wobei das Gerät gekennzeichnet wird durch ein erstes Regelungsmittel (78, 32), das als Antwort auf eine Betätigung der Fahrzeugbetriebsbremse wirksam ist, um den elektrischen Motor (10) auf eine Weise mit Energie zu versorgen, um die Motordrossel (62) auf eine Ruheposition zurückzuführen, bis die Motorposition anzeigt, daß die Ruheposition im wesentlichen erreicht worden ist (290, 310 - 314); und ein zweites Regelungsmittel (78, 168, 66), das als Antwort auf eine Betätigung der Fahrzeugbetriebsbremse über ein vorbestimmtes Zeitintervall (172) hinaus wirksam ist, um den selektiv in Eingriff bringbaren Kupplungsmechanismus (60) außer Eingriff zu bringen, wodurch die mechanische Kopplung zwischen dem elektrischen Motor (10) und der Motordrossel (62) unterbrochen bzw. getrennt wird.

2. Gerät nach Anspruch 1, worin das erste Regelungsmittel (78, 32) einen Kupplungsbefehl erzeugt, um einen Eingriff des selektiv in Eingriff bringbaren Kupplungsmechanismus (60) aufrechtzuerhalten, bis die Motorposition anzeigt, daß die Ruheposition im wesentlichen erreicht worden ist; und worin das zweite Regelungsmittel wirksam ist, um einen Eingriff des selektiv in Eingriff bringbaren Kupplungsmechanismus (60) gemäß dem Kupplungsbefehl zu regeln, der durch das erste Regelungsmittel während des vorbestimmten Zeitintervalls (172) erzeugt wird.

3. Gerät nach Anspruch 2, worin das zweite Regelungsmittel ein auf eine Bremse ansprechendes Mittel (78) einschließt, um ein Umgehungs-Regelungssignal zu erzeugen, falls die Betriebsbremse über das vorbestimmte Zeitintervall (172) hinaus betätigt worden ist; und ein Regelungsmittel (68) für einen Kupplungsmechanismus, das auf den Kupplungsbefehl und das Umgehungs-Regelungssignal anspricht und (1) bei Fehlen bzw. Nichtauftreten des Umgehungs-Regelungssignals, um den selektiv in Eingriff bringbaren Kupplungsmechanismus (60) gemäß dem Kupplungsbefehl selektiv in Eingriff zu bringen, und (2) bei Auftreten des Umgehungssignals wirksam ist, um den Kupplungsmechanismus ungeachtet des Kupplungsbefehls außer Eingriff zu bringen.

4. Ein Betriebsverfahren zum Regeln eines Drosselmittels eines Motorfahrzeugs bei Betätigung einer Fahrzeugbetriebsbremse, wobei das Drosselmittel einen elektrischen Motor (10) einschließt, der mit einer Motordrossel (62) des Motorfahrzeugs durch einen selektiv in Eingriff bringbaren Kupplungsmechanismus (60) mechanisch gekoppelt ist, wobei das Verfahren durch die Schritte gekennzeichnet ist, daß der elektrische Motor (10) als Antwort auf eine Betätigung der Fahrzeugbetriebsbremse auf eine Weise mit Energie versorgt wird, um die Motordrossel (62) auf eine Ruheposition zurückzuführen, bis die Motorposition anzeigt, daß die Ruheposition im wesentlichen erreicht worden ist; und der selektiv in Eingriff bringbare Kupplungsmechanismus als Antwort auf eine Betätigung der Fahrzeugbetriebsbremse über ein vorbestimmtes Zeitintervall hinaus außer Eingriff gebracht wird, wodurch die mechanische Kopplung zwischen dem elektrischen Motor (10) und der Motordrossel (62) unterbrochen bzw. getrennt wird.

**Revendications**

1. Appareil pour commander le moyen formant papillon des gaz d'un véhicule à moteur lors de l'actionnement des freins de service d'un véhicule, le moyen formant papillon des gaz comportant un moteur électrique (10) couplé mécaniquement à un papillon des gaz (62) du moteur du véhicule à moteur par l'intermédiaire d'un mécanisme (60) d'embrayage pouvant être embrayé sélectivement, l'appareil étant caractérisé par un premier moyen de commande (78, 32) fonctionnant en réponse à l'actionnement des freins de service du véhicule pour exciter le moteur électrique (10) de manière à ramener le papillon des gaz (62) du moteur dans une position de repos jusqu'à ce que la position du moteur indique que ladite position de repos a été sensiblement atteinte (290, 310-314); et un second moyen de commande (78, 168, 66) fonctionnant en réponse à l'actionnement des freins de service du véhicule, au-delà d'un intervalle de temps prédéterminé (172), pour libérer le mécanisme (60) d'embrayage pouvant être embrayé sélectivement, afin d'interrompre ainsi le couplage mécanique entre le moteur électrique (10) et le papillon des gaz (62) du moteur.

2. Appareil selon la revendication 1, dans lequel le premier moyen de commande (78, 32) génère une commande d'embrayage pour maintenir en prise le mécanisme (60) d'embrayage pouvant être embrayé sélectivement jusqu'à ce que la position du moteur indique que la position de repos a été sensiblement atteinte; et dans lequel le second moyen de commande fonctionne pour commander l'embrayage du mécanisme (60) d'embrayage pouvant être embrayé sélectivement en fonction de la commande d'embrayage générée par le premier moyen de commande, au cours de l'intervalle de temps prédéterminé (172).

3. Appareil selon la revendication 2, dans lequel le second moyen de commande comporte un moyen (78) sensible au frein pour générer un signal de commande de substitution si les freins de service ont été actionnés au-delà de l'intervalle de temps prédéterminé (172); et un moyen (68) de commande du mécanisme d'embrayage sensible à la commande d'embrayage et au signal de commande de substitution, et fonctionnant (1) en l'absence du signal de commande de substitution, pour embrayer de manière sélective le mécanisme (60) d'embrayage pouvant être embrayé de manière sélective en fonction de la commande d'embrayage, et (2) en présence du signal de substitution, pour libérer le mécanisme d'embrayage sans considération de la commande d'embrayage.

4. Procédé de fonctionnement pour commander le moyen formant papillon des gaz d'un véhicule à moteur lors de l'actionnement des freins de service du véhicule, le moyen formant papillon des gaz comportant un moteur électrique (10) couplé mécaniquement à un papillon des gaz (62) du moteur du véhicule à moteur par l'intermédiaire d'un mécanisme (60) d'embrayage pouvant être embrayé de manière sélective, le procédé étant caractérisé par les étapes d'excitation du moteur électrique (10) en réponse à l'actionnement des freins de service du véhicule de manière à ramener le papillon des gaz (62) du moteur dans une position de repos jusqu'à ce que la position du moteur indique que la position de repos a été sensiblement atteinte; et de libération du mécanisme d'embrayage pouvant être embrayé de manière sélective en réponse à l'actionnement des freins de service du véhicule à moteur, au-delà d'un intervalle de temps prédéterminé, afin d'interrompre le couplage mécanique entre le moteur électrique (10) et le papillon des gaz (62) du moteur.

Fig. 1

EP 0 324 531 B1

Fig.2

Fig.3

Fig.4

14

*Fig. 5*

*Fig. 6*

*Fig. 7*

15

START

INITIALIZE MEMORY, TIMERS:
- SET M-POS-ACT=0
- SET M-SPD-DES=50 STEPS/SEC (FWD)
- SET INTERRUPT TIME
*200*

DID RESET OCCUR ? *202*
YES

NO

DID WATCHDOG OUTPUT CHANGE STATE? *204*
NO

YES *206*

SERVICE WATCHDOG

*212*

READ INPUTS: N_V, R/A,S/C, BR, ON/OFF ETC. *208*

DETERMINE M-POS-DES *210*

*Fig. 8*

TIMER INTERRUPT

UPDATE MOTOR & TIMER STATUS - - - (SEE FIG. 10) *214*

IS UPDATE SPEED FLAG SET? *216*
YES *218*
NO *224*

CLEAR UPDATE SPEED FLAG

SET UPDATE SPEED FLAG

IS MOTOR RUNNING ? *222*
NO

YES *220*

CALL UPDATE MTR SPD SUBR (SEE FIG. 11)

CALL MTR CONTROL SUBR (SEE FIG.12-14) *226*

RETURN FROM INTERRUPT

*Fig. 9*

Fig. 10

Fig. II

Fig. 12

Fig. 13

Fig. 14